# FASCICULE DE BREVET EUROPEEN

(11) **EP 0 688 661 B1**
(45) Date de publication et mention de la délivrance du brevet: **01.10.1997**
(21) Numéro de dépôt: 95420162.0
(22) Date de dépôt: 19.06.1995
(51) Int. Cl.: B29C 65/00, B29C 65/78, A47G 19/22

(54) **Procédé et machine pour la réalisation de récipients en forme de coupes, ainsi que récipients obtenus**
Verfahren und Vorrichtung zur Herstellung von becherartigen Behältern, sowie dadurch erhaltene Behälter
Method and machine for making coupe-shaped containers and containers obtained thereby

(30) Priorité: 20.06.1994 FR 9407750
(43) Date de publication de la demande: 27.12.1995
(73) Titulaire: INJELEC S.A., F-69120 Vaulx en Velin (FR)
(72) Inventeur: Carry, Jean-Yves, F-69680 Chassieu (FR); Badoux, Christian, F-69150 Decines (FR)
(74) Mandataire: Monnier, Guy

(56) Documents cités:
- CA-A- 2 097 440
- CH-A- 554 161
- GB-A- 2 053 793
- GB-A- 2 071 566

## Description

La présente invention a trait aux récipients en forme de coupes, du genre constitués par un corps creux à profil plus ou moins évasé supporté par un pied central à plus petit diamètre.

Ce type de récipients, fréquemment utilisés pour le conditionnement de produits laitiers et de desserts individuels, est le plus souvent obtenu par injection d'une matière plastique à l'intérieur d'un moule en vue de la réalisation d'un article monobloc. Ce mode de fabrication est relativement coûteux, notamment par suite du prix élevé de l'outillage et du coût de son entretien, la durée d'utilisation étant relativement courte.

Pour remédier à cet inconvénient, le document CH-A-554 161 (CONTA SRL) propose de réaliser séparément, en une matière thermoplastique appropriée, une série de corps creux présentant le profil de la partie supérieure des récipients à obtenir, et une série de pieds conforme au préambule de la revendication 1. Puis, par des moyens de transfert convenables, on amène simultanément un corps et un pied en coïncidence axiale entre une enclume profilée pour s'engager dans le corps et l'électrode d'un dispositif ou tête de soudage classique du type à ultrasons. On rapproche axialement l'une de l'autre l'enclume et l'électrode précitées pour faire pénétrer l'enclume dans le corps creux jusqu'à porter contre le fond de celui-ci et on alimente alors le dispositif de soudage pour opérer par thermofusion l'assemblage des deux pièces. On écarte enfin l'une de l'autre l'enclume et l'électrode afin de permettre l'extraction et l'évacuation du récipient unitaire ainsi obtenu.

On observera que l'assemblage par soudage du chaque corps creux et du pied correspondant est effectué au niveau des surfaces planes qui forment le fond du corps et le sommet du pied, de sorte que cet assemblage implique un positionnement axial rigoureux des deux pièces à réunir.

Le document CA-A-2 097 440 (PRECISIONCRAFT Ltd) décrit des récipients en forme de coupes obtenus par soudage aux ultrasons de trois pièces séparées (corps creux, pied vertical et embase élargie). Les faces de ces pièces qui se font vis-à-vis présentent des moyens d'emboîtement et le soudage est opéré au niveau d'un anneau en saillie prévu sur l'une des faces précitées, moyennant une compression axiale exercée sur l'ensemble au moment de l'émission de l'énergie vibratoire.

La présente invention a pour premier objet le procédé de réalisation qui est défini à la revendication 1.

En fait, dans le cadre d'un procédé conforme à celui exposé dans le document CH-A-554 161 mentionné plus haut, l'invention consiste à faire comporter à chacune des enclumes engagées dans les corps creux et à chaque électrode de la tête de soudage associée aux pieds, des moyens de centrage qui, lors de la pénétration du chaque enclume dans le corps correspondant, coopèrent avec des moyens conjugués prévus sur chaque corps creux et sur chaque pied.

L'invention a pour second objet la machine destinée à la mise en oeuvre du procédé ci-dessus exposé, laquelle machine est définie à la revendication 2 et aux revendications 3 et 4 qui sont rattachées à celle-là.

Le dessin annexé, donné à titre d'exemple, permettra de mieux comprendre l'invention, les caractéristiques qu'elle présente et les avantages qu'elle est susceptible de procurer :
Fig. 1 est une vue en élévation montrant schématiquement l'agencement d'une machine suivant l'invention.
Fig. 2 est une coupe transversale suivant le plan indiqué en II-II en fig. 1.
Fig. 3 à 5 sont des coupes de détail illustrant le processus de fonctionnement de la machine suivant fig. 1 et 2.

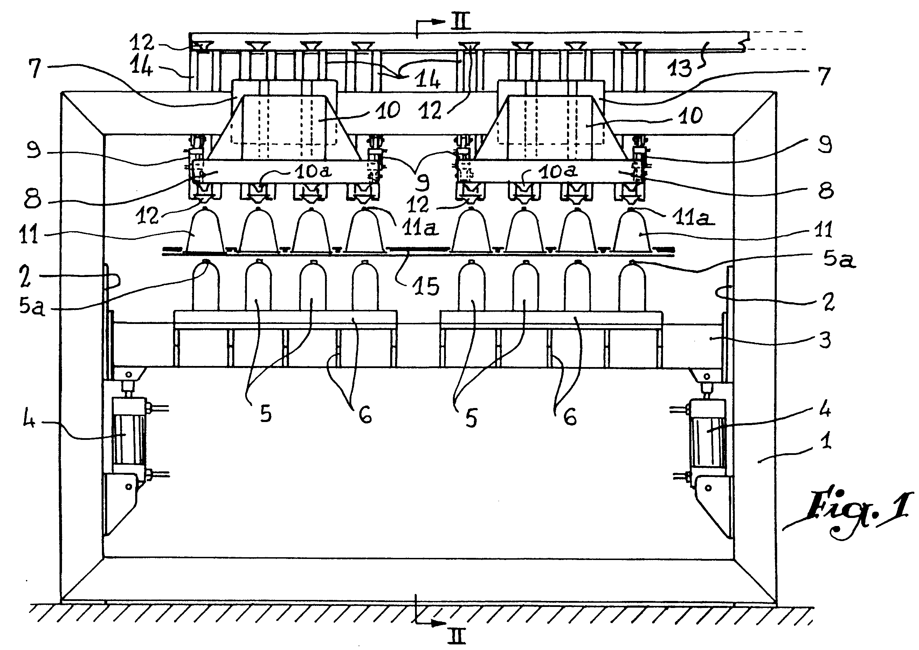

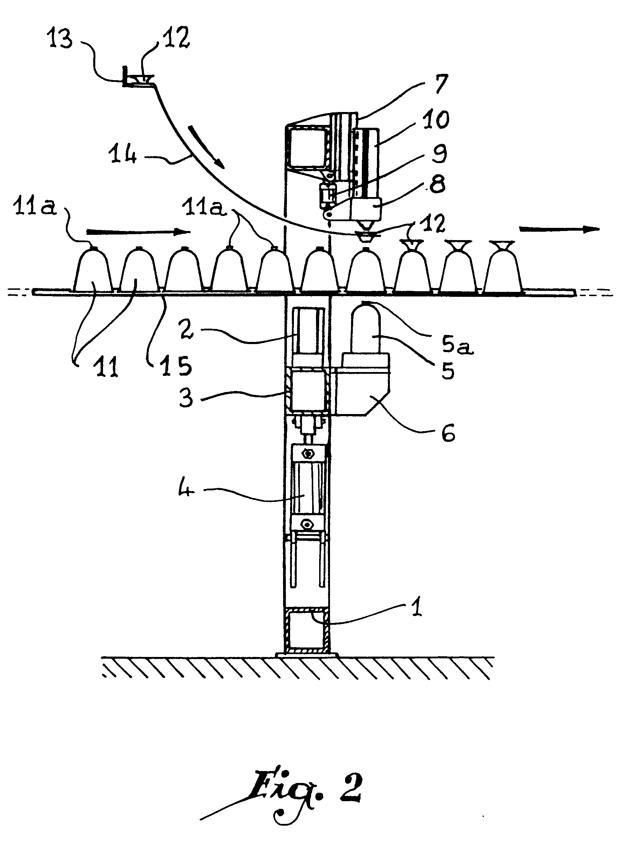

La machine représentée en fig. 1 et 2 comprend un bâti vertical 1 sur les montants duquel sont prévues des glissières 2 qui se font face afin d'assurer le guidage des extrémités d'une poutre horizontale 3. Le déplacement vertical (monte et baisse) de cette poutre 3 est obtenu de toute manière appropriée, par exemple à l'aide de deux vérins pneumatiques 4 à double effet dont le cylindre est convenablement fixé aux montants de bâti, au-dessous des glissières 2.

La poutre 3 est équipée d'une série d'enclumes 5 de forme substantiellement cylindrique, l'extrémité supérieure libre de chaque enclume présentant un profil arondi (cf. fig. 2) pourvu à son sommet d'un petit bossage 5a à section circulaire. Dans l'exemple de réalisation envisagé, on a supposé que la machine était dotée de deux jeux de quatre enclumes 5, disposées suivant un même axe parallèle à la poutre 3, chaque jeu étant supporté par une console latérale 6 rendue solidaire de ladite poutre.

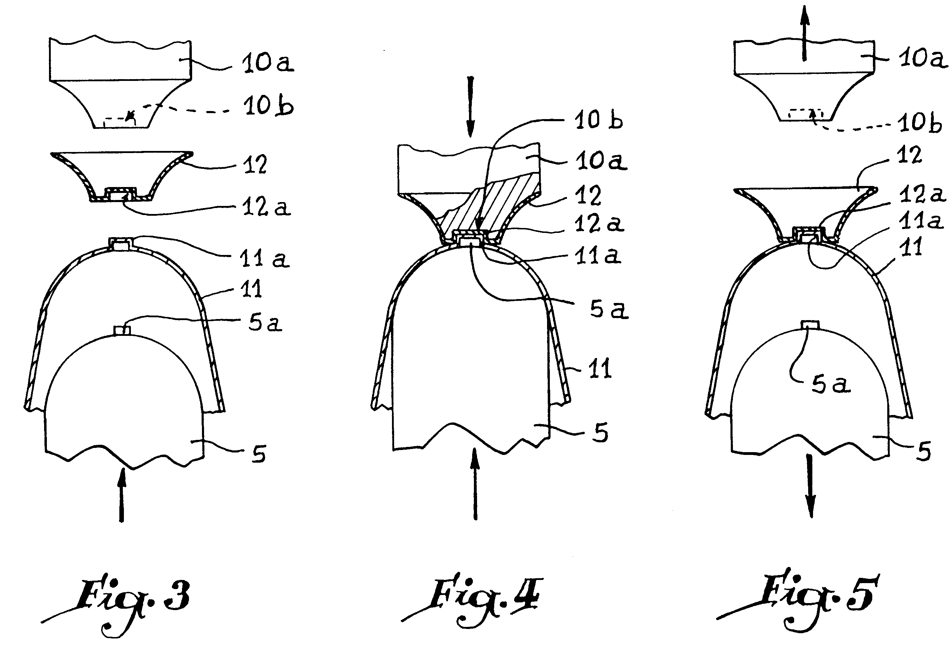

La traverse supérieure du bâti 1 est équipée de deux glissières verticales 7 formant guides pour deux châssis mobiles 8 dont le déplacement vertical est opéré à l'aide de vérins pneumatiques 9 à double effet. Chaque châssis 9 supporte quatre têtes de thermosoudage 10, avantageusement du type à ultrasons. Ces têtes 10 sont disposées de façon à ce que leur électrode inférieure de soudage 10a (fig. 3 à 6) soit disposée dans l'axe de l'une des enclumes 5 avec lesquelles lesdites têtes doivent coopérer pour l'opération d'assemblage.

A la machine ainsi constituée sont associées deux installations de conformation, avantageusement du type dit "à thermosoufflage", pour la réalisation d'une série de corps creux 11 et d'une série de pieds 12. Fig. 3 fait bien apparaître le profil de chaque corps creux 11, supposé tourné vers le bas, et l'on notera que le fond de ce profil, établi au rayon des enclumes 5, comporte un bossage 11a qui correspond au bossage 5a de chaque enclume 5 et auquel correspond une dépression 12a dans la paroi de chaque pied 12 qui fait face. Chaque électrode 10a est elle-même creusée d'une cavité axiale 10b ouverte vers le bas et l'on conçoit que les parties ou moyens 5a, 11a, 12a et 10a sont destinés, une fois amenés en coïncidence axiale, à s'engager les uns dans les autres pour assurer l'auto-centrage des éléments 5, 11, 12 et 10.

Au-dessus de la machine est prévu un distributeur vibrant schématisé en 13 en fig. 1 et 2, lequel est agencé pour alimenter par saccades des couloirs verticaux 14 en nombre égal à celui des enclumes 5. Chaque couloir 14 est profilé pour amener un pied 12 au droit de chacune des électrodes de soudage 10a.

La machine comprend encore un système d'alimentation formé par des glissières parallèles 15 orientées horizontalement, contre lesquelles vient prendre appui le bord d'un corps creux 11, ouvert vers le bas. Les corps creux 11 sont animés, par un poussoir non représenté, d'un mouvement d'avance saccadé, huit corps creux 11 venant, lors de chaque arrêt de ce mouvement, se placer entre les enclumes 5 et les pieds 12 retenus à l'extrémité inférieure de chaque couloir 14.

Si l'on suppose maintenant que lors de chaque arrêt de l'avance saccadée, les vérins 4 et 9 sont simultanément alimentés à l'extension, les électrodes 10a et les enclumes 5 se rapprochent axialement les unes des autres en provoquant d'une part l'engagement des enclumes 5 dans les corps 11 jusqu'à portée du sommet de chaque enclume contre le fond de chaque corps 11, d'autre part la coopération mutuelle des moyens de centrage sus-mentionnés. A la fin de ce déplacement vertical, les têtes 10 sont alimentées et opèrent de la sorte par thermofusion le soudage des huit corps creux 11 et des huit pieds 12 (fig. 4), ledit soudage s'effectuant au niveau des moyens de centrage 11a et 12a.

Les vérins 4 et 9 sont enfin alimentés à la contraction pour élever les têtes 10 et abaisser la poutre 3, de sorte que les coupes 11-12 obtenues par soudage peuvent être extraites des enclumes 5 et être évacuées en vue de leur stockage.

La machine suivant l'invention est susceptible de fonctionner à une cadence élevée, de sorte que la fabrication des coupes 11-12 se révèle particulièrement économique. On notera que le mode de fabrication permet de réaliser des récipients dont le pied présente une coloration différente de celle du corps creux, ce qui améliore l'aspect esthétique.

## Revendications

1. Procédé pour la réalisation de récipients en forme de coupes présentant un corps creux supporté par un pied central, du genre suivant lequel :
- on réalise séparément en une matière thermoplastique une série de corps creux (11) et une série de pieds (12) ;
- on amène simultanément un corps (11) et un pied (12) en coïncidence axiale entre une enclume (5) propre à s'engager dans le corps et l'électrode (10a) d'une tête de soudage (10) ;
- on rapproche axialement l'une de l'autre lesdites enclume (5) et électrode (10a) pour faire pénétrer l'enclume jusqu'à porter contre le fond du corps (11) ;
- on alimente la tête de soudage (10) pour opérer l'assemblage définitif des deux éléments (11, 12) par thermofusion ;
- et on écarte enfin l'une de l'autre l'enclume (5) et l'électrode (10a) afin de permettre l'extraction et l'évacuation des récipients ou coupes (11-12) obtenus,
caractérisé en ce qu'on fait comporter à chaque enclume (5) et à chaque électrode (10a) des moyens de centrage (5a, 10b) aptes, lors de la pénétration de l'enclume dans le corps, à coopérer avec des moyens correspondants (11a, 12a) prévus sur chaque corps creux (11) et sur chaque pied (12), la thermofusion s'opérant ainsi au niveau desdits moyens de centrage.

2. Machine pour la mise en oeuvre du procédé suivant la revendication 1, du genre comprenant en combinaison :
- une série d'enclumes (5) profilées pour pénétrer à l'intérieur d'un nombre correspondant de corps creux (11) réalisés au préalable ;
- une série en nombre correspondant de têtes de soudage (10) dont les électrodes (10a) sont orientées suivant l'axe des enclumes (5) précitées ;
- des moyens (4, 9) pour animer les enclumes (5) et les têtes (10) d'un déplacement axial alternatif propre à les rapprocher mutuellement les unes des autres et à les écarter ;
- et des moyens de transfert (13-14, 15) agencés pour amener un nombre correspondant de corps creux (11) et de pieds (12), réalisés au préalable, en coïncidence axiale entre les enclumes et les électrodes sus-mentionnées, ces dernières étant alimentées en fin de mouvement de rapprochement afin d'opérer le soudage des corps (11) et des pieds (12),
chaque enclume (5) et chaque électrode (10a) comportent des moyens de cent rage (5a, 10b) aptes, lors du rapprochement mutuel des enclumes et des têtes, à coopérer avec des moyens correspondants (11a, 12a) prévus sur chaque corps creux (11) et sur chaque pied (12).

3. Machine suivant la revendication 2, où les enclumes (5) sont portées par une poutre horizontale (3) que des vérins à double effet (4) animent d'un mouvement alternatif.

4. Machine suivant l'une quelconque des revendications 2 et 3, où les moyens de transfert comprennent d'une part un distributeur (13) associé à des couloirs verticaux (14) pour amener une série de pieds (12) au-dessous des électrodes (10a), d'autre part des glissières (15) associées à un poussoir pour amener par saccades les corps creux (11) entre lesdites électrodes et les enclumes (5).

## Claims

1. Process for the production of cup-shaped containers having a hollow body supported by a central foot, of the kind in which:
- a series of hollow bodies (11) and a series of feet (12) are produced separately from a thermoplastic;
- a body (11) and a foot (12) are brought simultaneously into axial coincidence between an anvil (5) suitable for being engaged in the body and the electrode (10a) of a welding head (10);
- the said anvil (5) and the said electrode (10a) are moved axially towards each other in order to make the anvil penetrate until it bears against the bottom of the body (11);
- the welding head (10) is supplied in order to carry out the final assembly of the two elements (11, 12) by heat-fusing;
- and, finally, the anvil (5) and the electrode (10a) are moved away from each other so as to allow the containers or cups (11-12) obtained to be extracted and removed,
characterized in that each anvil (5) and each electrode (10a) is made to include centring means (5a, 10b) which are capable, during penetration of the anvil into the body, of mating with corresponding means (11a, 12a) provided on each hollow body (11) and on each foot (12), heat-fusing taking place at the said centring means.

2. Machine for the implementation of the process according to Claim 1, of the kind comprising, in combination:
- a series of anvils (5) profiled to penetrate into a corresponding number of hollow bodies (11) produced beforehand;
- a series, of corresponding number, of welding heads (10) whose electrodes (10a) are oriented along the axis of the aforementioned anvils (5);
- means (4, 9) for driving the anvils (5) and the heads (10) in an alternating axial movement suitable for mutually moving them closer together and for moving them apart;
- and transfer means (13-14, 15) designed to bring a corresponding number of hollow bodies (11) and of feet (12), produced beforehand, into axial coincidence between the abovementioned anvils and electrodes, the latter being supplied, at the end of the movement bringing them closer together, so as to weld the bodies (11) and the feet (12),
each anvil (5) and each electrode (10a) include centring means (5a, 10b) capable, as the anvils and heads are moved closer together, of mating with corresponding means (11a, 12a) provided on each hollow body (11) and on each foot (12).

3. Machine according to Claim 2, in which the anvils (5) are supported by a horizontal beam (3) which double-acting cylinders (4) set into an alternating motion.

4. Machine according to either of Claims 2 and 3, in which the transfer means comprise, on the one hand, a distributor (13) associated with vertical channels (14) for bringing a series of feet (12) under the electrodes (10a) and, on the other hand, slideways (15) associated with a pusher for bringing, in jolts, the hollow bodies (11) between the said electrodes and the anvils (5).

## Patentansprüche

1. Verfahren zur Herstellung von becherförmigen Behältern, die einen von einem mittleren Fuß getragenen Hohlkörper aufweisen, der folgenden Art, bei der:
- aus einem thermoplastischen Material getrennt eine Reihe von Hohlkörpern (11) und eine Reihe von Füßen (12) hergestellt wird;
- gleichzeitig ein Körper (11) und ein Fuß (12) in axialer Übereinstimmung zwischen einem Amboß (5), der zum Eingreifen in den Körper (11) geeignet ist, und die Elektrode (10a) eines Schweißkopfes (10) gebracht werden;
- der Amboß (5) und die Elektrode (10a) zueinander axial angenähert werden, um den Amboß bis zum Boden in den Körper (11) eingreifen zu lassen;
- der Schweißkopf (10) gespeist wird, um die endgültige Zusammenfügung der beiden Elemente (11,12) durch Wärmeschmelzen zu betreiben;
- und schließlich der Amboß (5) und die Elektrode (10a) voneinander entfernt werden, um die Abnahme und Evakuierung der erhaltenen Behälter oder Becher (11-12) zu ermöglichen,
**dadurch gekennzeichnet,**
daß jedem Amboß (5) und jeder Elektrode (10a) Zentriermittel (5a,10b) zugeordnet werden, die dazu geeignet sind, während der Einführung des Ambosses in den Körper mit entsprechenden (11a,12a), an jedem Hohlkörper (11) und jedem Fuß (12) vorgesehenen Mitteln zusammenzuarbeiten, wobei das Wärmeschmelzen somit an den Zentriermitteln stattfindet.

2. Maschine zur Durchführung des Verfahrens nach Anspruch 1 in Kombination umfassend:
- eine Reihe von Ambossen (5), die derart geformt sind, daß sie in das Innere einer entsprechenden Anzahl von vorgefertigten Hohlkörpern (11) eingreifen;
- eine Reihe einer entsprechenden Anzahl von Schweißköpfen (10), dessen Elektroden (10a) entsprechend der Achse der zuvor erwähnten Ambosse (5) ausgerichtet sind;
- Mittel (4,9), um die Ambosse (5) und die Köpfe (10) zu einer wechselnden axialen Verschiebung zu erregen, die sie einander näherbringt und voneinander entfernt; und
- Transportmittel (13-14,15), die vorgesehen sind, um eine entsprechende Anzahl von vorgefertigten Hohlkörpern (11) und Füßen (12) in axialer Übereinstimmung zwischen die vorerwähnten Ambosse und Elektroden zu bringen, wobei letztere am Ende der Bewegung versorgt werden, um das Schweißen der Näherungskörper (11) und der Füße (12) durchzuführen, wobei jeder Amboß (5) und jede Elektrode (10a) Zentriermittel (5a,10b) umfassen, die geeignet sind, während der gegenseitigen Annäherung der Ambosse und der Köpfe mit entsprechenden Mitteln (11a,12a) zusammenzuarbeiten, die an jedem Hohlkörper und jedem Fuß vorgesehen sind.

3. Maschine nach Anspruch 2, bei der die Ambosse (5) durch einen horizontalen Träger (3) getragen werden, den doppelt wirkende Kolben-Zylinderanordnungen (4) zu einer wechselnden Bewegung anregen.

4. Maschine nach einem der Ansprüch 2 und 3, bei der die Transportmittel einerseits einen senkrechten Rutschen (14) zugeordneten Verteiler (13), um eine Reihe von Füßen (12) über die Elektroden (10a) zu bringen, und andererseits Gleitelemente (15) umfassen, die einem Mitnehmer zugeordnet sind, um stoßweise die Hohlkörper (11) zwischen die Elektroden und die Ambosse (5) zu bringen.
